# EUROPEAN PATENT SPECIFICATION

(11) **EP 0 448 851 B1**
(45) Date of publication and mention of the grant of the patent: **07.02.1996**
(21) Application number: 90303148.2
(22) Date of filing: 23.03.1990
(51) Int. Cl.: C08J 9/18, C08J 9/22

(54) **Reimpregnation of plastic foam particles with an inorganic gas**
Wiederimprägnierung von Plastikschaumpartikeln mit einem anorganischen Gas
Réimprégnation de particules de mousse plastique par un gas inorganique.

(43) Date of publication of application: 02.10.1991
(73) Proprietor: ARCO Chemical Technology, L.P., Greenville, Delaware 19807 (US)
(72) Inventor: Meyer, Bernard H., Newtown Square, PA 19073 (US); Kinslow, Joseph C., Media, PA 19063 (US)
(74) Representative: Cropp, John Anthony David

(56) References cited:
- EP-A- 0 164 855
- FR-A- 1 534 454
- US-A- 4 420 448
- US-A- 4 464 484

## Description

The present invention is directed to a method of impregnating and reimpregnating polystyrene, styrene copolymers, polymethyl methacrylate, methyl methacrylate copolymers, crosslinked variations thereof and interpenetrating networks thereof with carbon dioxide or other inorganic gases, or combinations of hydrocarbon and carbon dioxide.

The preparation of molded foamed plastic articles is well known wherein plastic particles are impregnated with organic blowing agents, expanded to preliminary low density particles, placed into a mold and finally expanded to the desired fully expanded article. The most used organic blowing agent is n-pentane. Unfortunately, n-pentane is now considered to be hazardous in the quantities which are removed during the molding. Further, the residual pentane in the molded parts continues to escape into the atmosphere for an extended time after removal of the part from the mold.

To eliminate this problem, various inorganic blowing agents such as carbon dioxide, nitrogen, air and other pneumatogens have been tried.

U.S. Patent 2,531,665 teaches to impregnate polymers at 100-125°C with inert gas under pressure followed by cooling and reheating in a mold to bring about expansion.

U.S. Patent 2,848,427 teaches to impregnate polystyrene crosslinked with 0.01-0.25% DVB with CO₂ under pressure at a temperature below the Tg until at least 2% CO₂ was absorbed.

U.S. Patent 3,243,485 teaches to impregnate films or sheets of polystyrene in dry ice.

It is known to prepare foamed plastics moldings by impregnating polymer particles with a blowing agent, partially expanding the impregnated particles to a preliminary low-density, and placing the partially expanded particles in a mold and heating the particles in the mold to cause further expansion and fusion of the particles thereby forming the molding. The partially expanded particles are sometimes referred to as pre-expanded particles or pre-puff.

US Patent 4464484 describes the formation of pre-expanded particles using carbon dioxide as a blowing agent and forming a molding from the pre-expanded particles by placing them in a mold and heat-expanding them.

We have now found that in cases where the blowing agent is depleted by the pre-expansion step, the particles can be re-impregnated by contacting the particles with gas, liquid or solid carbon dioxide, air or other inorganic blowing agents for a time sufficient to accomplish the impregnation.

US Patent 4420448 relates to the production of a polystyrene foam sheet by extrusion of a mixture of molten polymer and organic hydrocarbon or halocarbon blowing agent and describes how the ageing of the extruded foam sheet, which is required to reduce the problem of sag or distortion of the sheet during subsequent thermoforming due to the solvating effect of the blowing agent on the polystyrene, may be accelerated by exposing the extruded foam sheet to an atmosphere of carbon dioxide.

According to the present invention, there is provided a method of forming a foamed plastics molding by the steps of (a) impregnating polymer particles with a blowing agent, (b) partially expanding the impregnated particles to a preliminary low density at a temperature above the glass transition temperature of the polymer-carbon dioxide blend and (c) placing the partially expanded particles in a mold and further expanding and fusing the particles to form the molding by heating in a foam molding machine characterised in that
the plastics material is selected from styrene polymers and copolymers, polymethyl methacrylate, methyl methacrylate copolymers, crosslinked variations thereof and interpenetrating networks thereof;
step (a) involves impregnating the polymer particles with carbon dioxide to obtain 1 to 25% carbon dioxide absorption, and
prior to step (c) the partially expanded particles are re-impregnated in gas, liquid or solid carbon dioxide, air, nitrogen or other inorganic gas or mixtures thereof, or combinations of hydrocarbon and carbon dioxide.

The styrene copolymer is preferably polystyrene.

Particularly suitable copolymers of styrene are those copolymers with from 5 to 35 mole percent of maleic anhydride and its derivatives such as the imide, N-alkylimide, N-phenylimide, esters, half acids and half esters. Other suitable copolymers are styrene-acrylonitrile, acrylonitrile-butadiene-styrene, styrene-methyl methacrylate, and the rubber modified high impact styrene copolymers.

When carbon dioxide is used as the blowing agent to form the pre-expanded polymer particles, it escapes exceedingly fast from the polymer particles even at room temperature so that after pre-expansion the particles no longer contain enough blowing agent to allow the particles to be further expanded during the molding process. In accordance with the present invention, the particles are re-impregnated with carbon dioxide or a different gas. In the case of carbon dioxide, the polymer need only be allowed to stand in the presence of dry ice powder or nuggets for times from one hour to two days. Compressed air at 207 KPa gauge (30 psig) has been used successfully for the re-impregnation.

The re-impregnation may be accomplished with a mixture of carbon dioxide and a minor amount of a hydrogen blowing agent.

The use of the pneumatogens specified above eliminates the objections encountered when the organic hydrocarbon blowing agents are used. Thus, no toxic fumes are given off during the molding cycles. Further, there are no residual vapors given off by the moldings after removal from the mold. Although not completely satisfactory, combinations of hydrocarbon and CO₂ may also be used.

The following examples are meant to further illustrate the invention, but not to limit the claims.

### EXAMPLE I

Three hundred grams of polystyrene beads having a weight average molecular weight of 300,000 (0.4 mm diameter) were mixed with 1200 g of dry ice nuggets for a minimum of 24 hr or until the volatiles in the beads reached 6 wt-% or more. The beads were then removed from the dry ice and immediately expanded in a steam autoclave [138 KPa gauge (20 psig) external and 172 KPa gauge (25 psig) internal] for 5-10 sec. The resultant puff had a density of 9.6-11.2 Kg/m³⁽6-7 pcf).

The pre-puff from the above were molded into cups after varying impregnation treatments. The fusion of the molded articles were rated and recorded in Table I.

**TABLE I**

| Treatment | Fusion |
|---|---|
| None | Poor |
| 1 Day in dry ice | Good |
| 1 Day in air [207 KPa gauge (30psig)] | Good |

It can be seen from the data in Table I that when the beads were pre-puffed, the CO₂ was completely dissipated and the moldings were not fused. Reimpregnation of the pre-expanded beads allowed the reimpregnated beads to be molded into parts having reasonable fusion of the beads. The use of

### EXAMPLE II

Three hundred grams of polystyrene beads having a weight average molecular weight of 200,000 (0.8 mm diameter) were mixed with 1200 g of dry ice nuggets for a minimum of 24 hr or until the volatiles in the beads reached 6 wt-% or more. The beads were then removed from the dry ice and immediately expanded in a steam autoclave [138 KPa gauge (20 psig) external and 172 KPa gauge 25 (psig) internal) for 5-10 sec. The resultant puff had a density of 3.2-4.8 Kg/m³ (2-3 pcf).

The pre-puff from the above were molded after varying times in dry ice. The density and percent fusion of the molded article were measured and recorded in Table II.

**TABLE II**

| Treatment | Density Kg/m³ (pcf) | Fusion (%) |
|---|---|---|
| None | 3.90 (2.44) | 1.00 |
| 2 hours in dry ice | 3.66 (2.29) | 25.00 |
| 4 hours in dry ice | 3.65 (2.28) | 15.00 |
| 2 days in dry ice | 3.94 (2.46) | 14.00 |

It can be seen from the data in Table II that when the beads were pre-puffed, the CO₂ was completely dissipated and the moldings were not fused. Reimpregnation of the pre-expanded beads allowed the reimpregnated beads to be molded into parts having reasonable fusion of the beads.

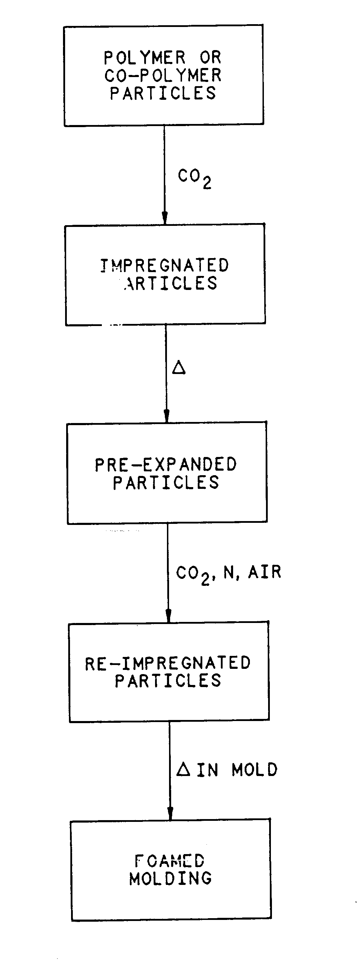

## Claims

1. A method of forming a foamed plastics molding by the steps of (a) impregnating polymer particles with a blowing agent, (b) partially expanding the impregnated particles to a preliminary low density at a temperature above the glass transition temperature of the polymer-carbon dioxide blend and (c) placing the partially expanded particles in a mold and further expanding and fusing the particles to form the molding by heating in a foam molding machine characterised in that
the plastics material is selected from styrene polymers and copolymers, polymethyl methacrylate, methyl methacrylate copolymers, crosslinked variations thereof and interpenetrating networks thereof;
step (a) involves impregnating the polymer particles with carbon dioxide to obtain 1 to 25% carbon dioxide absorption, and
prior to step (c) the partially expanded particles are re-impregnated in gas, liquid or solid carbon dioxide, air, nitrogen or other inorganic gas or mixtures thereof, or combinations of hydrocarbon and carbon dioxide.

2. The process of claim 1 wherein the styrene polymer is polystyrene.

3. The process of claim 1 wherein the styrene copolymer is a styrene-maleic anhydride copolymer containing 5 to 35 mole-% maleic anhydride.

4. The process of claim 1 wherein the styrene copolymer is a styrene-acrylonitrile copolymer.

5. The process of claim 1 wherein the styrene copolymer is an acrylonitrile-butadiene-styrene copolymer.

6. The process of claim 1 wherein the styrene copolymer is a styrene-methyl methacrylate copolymer.

7. The process of claim 1 wherein the styrene copolymer is a high impact rubber modified polystyrene.

8. The process of any one of claims 1 to 7 wherein the re-impregnation is accomplished with a mixture of carbon dioxide and a minor amount of a hydrocarbon blowing agent.

## Patentansprüche

1. Verfahren zum Formen von geschäumten Kunststofformlingen, bei dem man
(a) Polymerteilchen mit einem Treibmittel imprägniert,
(b) die imprägnierten Teilchen bei einer Temperatur oberhalb der Glasphasenübergangstemperatur der Polymer/Kohlendioxid-Mischung auf eine vorläufige niedrige Dichte teilexpandiert,
(c) die teilexpandierten Teilchen in eine Form gibt und zum Bilden der Formartikel durch Erhitzen in einer Formschäumanlage weiter expandiert und verschmilzt,
dadurch gekennzeichnet, daß
- das Kunststoffmaterial aus Styrolpolymeren und -copolymeren, Polymethylmethacrylat, Methylmethacrylatcopolymeren, deren vernetzten Varianten sowie deren einander durchdringenden Netzwerken ausgewählt wird,
- in Schritt (a) die Polymerteilchen mit Kohlendioxid bis zu einer 1 - 25 % igen Kohlendioxidabsorption imprägniert werden und
- die teilexpandierten Teilchen vor Schritt (c) mit gasförmigem, flüssigem oder festem Kohlendioxid, Luft, Stickstoff oder einem anderen anorganischen Gas oder deren Mischungen oder mit Kombinationen aus Kohlenwasserstoff und Kohlendioxid reimprägniert werden.

2. Verfahren gemäß Anspruch 1, bei dem das Styrolpolymer Polystyrol ist.

3. Verfahren gemäß Anspruch 1, bei dem das Styrolpolymer ein 5 bis 35 Mol-% Maleinsäureanhydrid enthaltendes Styrol/Maleinsäureanhydrid-Copolymer ist.

4. Verfahren gemäß Anspruch 1, bei dem das Styrolpolymer ein Styrol/Acrylnitril-Copolymer ist.

5. Verfahren gemäß Anspruch 1, bei dem das Styrolpolymer ein Acrylnitril/Butadien/ Styrol-Copolymer ist.

6. Verfahren gemäß Anspruch 1, bei dem das Styrolpolymer ein Styrol/Methylmethacrylat-Copolymer ist.

7. Verfahren gemäß Anspruch 1, bei dem das Styrolpolymer mit Kautschuk modifiziertes Polystyrol hoher Stoßfestigkeit ist.

8. Verfahren gemäß einem der Ansprüche 1 bis 7, bei dem das Reimprägnieren mit einem Gemisch aus Kohlendioxid und einer kleinerern Menge eines Kohlenwasserstoffs als Treibmittel ausgeführt wird.

## Revendications

1. Procédé pour former un moulage en matières plastiques moussées par les étapes de (a) imprégnation de particules de polymère avec un agent de soufflage, (b) expansion de façon partielle des particules imprégnées jusqu'à une faible densité préliminaire à une température supérieure à la température de transition vitreuse du mélange de polymère et de dioxyde de carbone et (c) mise en place des particules partiellement expansées dans un moule et expansion supplémentaire et fusion des particules pour former le moulage par chauffage dans une machine à mouler une mousse, caractérisé en ce que :
la matière plastique est choisie parmi des polymères et copolymères de styrène, un polyméthacrylate de méthyle, des copolymères de méthacrylate de méthyle, leurs variations réticulées et leurs réseaux entrecroisés ;
l'étape (a) implique l'imprégnation des particules de polymère avec du dioxyde de carbone pour obtenir une absorption de 1 à 25% de dioxyde de carbone, et
avant l'étape (c), les particules partiellement expansées sont réimprégnées dans du dioxyde de carbone sous forme de gaz, de liquide ou de solide, de l'air, de l'azote ou un autre gaz inorganique ou leurs mélanges ou des combinaisons d'hydrocarbure et de dioxyde de carbone.

2. Procédé suivant la revendication 1, dans lequel le polymère de styrène est un polystyrène.

3. Procédé suivant la revendication 1, dans lequel le copolymère de styrène est un copolymère de styrène et d'anhydride maléique contenant 5 à 35% en moles d'anhydride maléique.

4. Procédé suivant la revendication 1, dans lequel le copolymère de styrène est un copolymère de styrène et d'acrylonitrile.

5. Procédé suivant la revendication 1, dans lequel le copolymère de styrène est un copolymère d'acrylonitrile-butadiène-styrène.

6. Procédé suivant la revendication 1, dans lequel le copolymère de styrène est un copolymère de styrène et de méthacrylate de méthyle.

7. Procédé suivant la revendication 1, dans lequel le copolymère de styrène est un polystyrène modifé par un caoutchouc ayant une forte résistance aux chocs.

8. Procédé suivant l'une quelconque des revendications 1 à 7, dans lequel la réimprégnation est accomplie avec un mélange de dioxyde de carbone et d'une quantité mineure d'un agent de soufflage de type hydrocarbure.
